# EUROPÄISCHE PATENTSCHRIFT

(11) **EP 1 280 303 B1**
(45) Veröffentlichungstag und Bekanntmachung des Hinweises auf die Patenterteilung: **12.04.2006**
(21) Anmeldenummer: 02100747.1
(22) Anmeldetag: 25.06.2002
(51) Int. Cl.: H04L 12/56, H04Q 11/04

(54) **Paketvermittlungsvorrichtung mit einem Rückkopplungsverfahren der Zuteileinheit**
Packet switching device with a feedback method for its access unit
Dispositif de commutation de paquet avec un procédé de retour pour son unité d'accès

(30) Priorität: 26.06.2001 DE 10130749
(43) Veröffentlichungstag der Anmeldung: 29.01.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: van Wageningen, Andries, 52066, Aachen (DE); Reumermann, Hans-Jürgen, 52066, Aachen (DE); Lelkens, Armand, 52066, Aachen (DE); Schoenen, Rainer, 52066, Aachen (DE)
(74) Vertreter: Volmer, Georg

(56) Entgegenhaltungen:
- WO-A-00/38376
- WO-A-01/19037
- DE-A- 10 043 745

## Beschreibung

Die Erfindung bezieht sich auf eine Paketvermittlungsvorrichtung mit mehreren Leitungs- und Vermittlungseinheiten.

In der Veröffentlichung "Weighted Arbitration Algorithms with Priorities for Input-Queued Switches with 100% Throughput" von R. Schoenen, G. Post, G. Sander, Broadband Switching Symposium '99, werden verschiedene, gewichtete Vermittlungsalgorithmen einer Paketvermittlungsvorrichtung verglichen. Die Vermittlungsalgorithmen versuchen mit unterschiedlichen Vermittlungsschritten eine Kollision mehrerer für den selben Ausgangsport der Paketvermittlungsvorrichtung bestimmter Pakete zu verhindern und daraus resultierenden Datenverlust oder Verzögerung zu reduzieren. Ein Verfahren zur Berücksichtigung der Zustände der Ausgangsports während der Vermittlung wird in der Veröffentlichung nicht erwähnt.

Aus der WO 00 38376 A ist eine Paketvermittlungsvorrichtung bekannt. In der beschriebenen Paketvermittlungsvorrichtung werden anhand einer Zuteilungsmatrix Verknüpfungen zwischen Eingangs- und Ausgangsports definiert und Elemente (Gewichtungen) der Zuteilungsmatrix mit Hilfe einer Formel berechnet. Dabei fließen in die Formel Gewichtungen ein, die mittels eines rückgekoppelten Wertes korrigiert wurden.

Die WO 01 19037 A offenbart eine Paketvermittlungsvorrichtung, die mit Hilfe einer Zellkonfliktauflösungseinheit arbeitet. Die Zellkonfliktauflösungseinheit berücksichtigt dabei keine rückgekoppelte Werte, so dass kein Austausch von Rückkopplungsinformationen statt findet.

Der Erfindung liegt die Aufgabe zugrunde, eine am Ausgangsport verlustlose Vermittlung von Daten in Form von Paketen zu gewährleisten.

Die Aufgabe wird durch eine Paketvermittlungsvorrichtung gelöst, bei der ein Rückkopplungsvektor bestehend aus wenigstens einem Element, welches die Zustände des Speichers des Ausgangsports repräsentiert, zur Reduzierung der möglichen Verknüpfung vorgesehen ist, wobei Elemente einer Spalte der Zustandsmatrix, die größer sind, als das der Spalte entsprechende Element des Rückkopplungsveknols, bei der Vermittlung berücksichtigt werden.

Eine Paketvermittlungsvorrichtung besteht aus einer Leitungseinheiten (Line Card) und mehreren Vermittlungseinheiten (Switch Card). Zu Komponenten einer Leitungseinheit zählt als wesentliche Komponente eine Portsteuerung. Jede Portsteuerung ist mit mehreren parallel arbeitenden Vermittlungseinheiten verbunden und hat die Aufgabe an der Paketvermittlungsvorrichtung ankommende, zu vermittelnde Pakete nach Priorität und gewünschten Ausgangsport der Paketvermittlungsvorrichtung anzuordnen. Die Anordnungen der Pakete nach Priorität und gewünschten Ausgangsport in der Portsteuerung der Paketvermittlungsvorrichtung werden als virtuelle Warteschlangen (VOQ bzw. Virtual Output Queue) bezeichnet.

Die Portsteuerung besitzt Informationen über den Zustand sog. Zustandsinformationen der virtuellen Warteschlange und verschickt diese in regelmäßigen Zeitabständen an die Vermittlungseinheiten.

Jede Vermittlungseinheit besteht aus einer Koppelmatrix (Crosspoint Matrix) und einer Zuteileinheit (Arbiter). Die Konfiguration der Koppelmatrix werden in regelmäßigen Zeitabständen durch die Zuteileinheit neu bestimmt und somit neu Verknüpfungen zwischen Ein- und Ausgangsport der Paketvermittlungsvorrichtung für die Vermittlung der Pakete erstellt.

Am Ausgang jeder Portsteuerung werden die Datenpakete in Warteschlangen zwischengespeichert bevor sie die Portsteuerting und die Paketvermittlungsvorrichtung verlassen. Falls die Betriebsgeschwindigkeit des Ausgangsports langsamer ist als die Betriebsgeschwindigkeit der Paketvermittlungvorrichtung, können die Datenpakete die Ausgangsports nicht ausreichend schnell verlassen und die Warteschlangen werden durch die Datenpakete überfüllt.

Zur Information der Eingangsports über die Überfüllung der Warteschlangen am Ausgangsport werden durch die Portsteuerung sog. Rückkopplungsinformationseinheiten generiert.

Ein für die Rückkopplung benötigte aus Rückkopplungsinformationseinheiten bestehender Informationsfluss zwischen Ausgangssports und Eingangsports wird nicht über eine direkte Verbindung sondern über eine indirekte Verbindung realisiert. Bei einer direkten Verbindung können z B. Rückkopplungsmformationaeinheiten von den Ausgangsports zu den Eingangsports über die Paketvermittlungsvorrichtung verschickt werden. Bei einer indirekten Verbindung werden die von der Portsteuerung der Ausgangsports generierten Rückkopplungsinformationseinheiten zu der Zuteileinheit gesendet. Die Zuteileinheit sammelt die empfangenen Rückkopplungsinformationseinheiten und benutzt sie bei Entscheidungen zur Verknüpfung der Eingangsports mit den Ausgangsports Da die Ergebnisse der Zuteileinheit den Eingangsports (sowie auch an die Kopplungsmatrix) mitgeteilt werden und die Ergebnisse der Zuteileinheit von den Rück kopplungsinformationseinheiten der Ausgangsports beeinflußt wurden, fließen damit implizit die Rückkopplunganformationseinheiten der Ausgangsports an die Eingangsports.

Die Rückkopplungsinformationseinheiten können von der Zuteileinheit in einem Rückkopplungsvektor festgehalten werden. Mithilfe der Rückkopplungsinformationseinheiten reduziert die Zuteileinheit die möglichen Verknüpfungen zwischen einem Eingangsport und einem Ausgangsports der Pakervermittlungswrrichtung. Der Rückkopplungsvektor enthält mehrere Elemente, wobei jedes Element eine Rückkopplungsinformationseinheit repräsentiert, die den Zustand jeweils eines Ausgangsports wiedergibt.

Die Vermittlung findet mit Anwendung des Rückkopplungsvektors statt. Eine Zustandsmatrix der Paketvermittlungsvorrichtung enthält mehrere Elemente, welche eine Gewichtung jeder Verknüpfung eines Eingangsports mit einem Ausgangsport repräsentieren. Elemente der Zustandsmatrix, die kleiner oder gleich sind als das entsprechende Element des Ausgangsports werden in der Vermittlung nicht berücksichtigt. Die entsprechenden Eingangsports können keine Datenpakete an die nicht berücksichtigten Ausgangsports verschicken. Elemente der Zustandsmatrix die größer sind als das entsprechende Element in dem Rückkopplungsvektor werden bei der Vermittlung berücksichtigt.

Die Erfindung betrifft auch eine Leitungseinheit für eine Paketvermittlungsvorrichtung mit einem Ausgangsport und einer Portsteuerung zur Generierung wenigsten einer Rückkopplungsinformationseinheit zur Information einer Zuteileinheit über Zustände der Warteschlangen des Ausgangsports.

Weiterhin betrifft die Erfindung eine Vermittlungseinheit bestehend aus einer Koppelmatrix und einer Zuteileinheit zur Steuerung der Koppelmatrix für eine Paketvermittlungsvorrichtung mit wenigstens einer Leitungseinheit, die einen Ausgangsport und einer Portsteuerung zur Generierung wenigsten einer Rückkopplungsinformationseinheit zur Information einer Zuteileinheit über Zustände der Warteschlangen des Ausgangsports enthält.

Ein Ausführungsbeispiel der Erfindung wird nachstehend anhand der Figur näher erläutert. Es zeigt:
- Fig. 1: eine Paketvermittlungsvorrichtung,
- Fig. 2: Zustände eines Speichers im Ausgangsport,
- Fig. 3: eine Darstellung einer Zustands- und einer Entscheidungsmatrix zur Verknüpfung von Eingangs- und Augangsports und
- Fig. 4: eine Darstellung der Zustands- und Entscheidungsmatrix zur Verknüpfung von Eingangs- und Ausgangsports mit einem Rückkopplungsvektor.

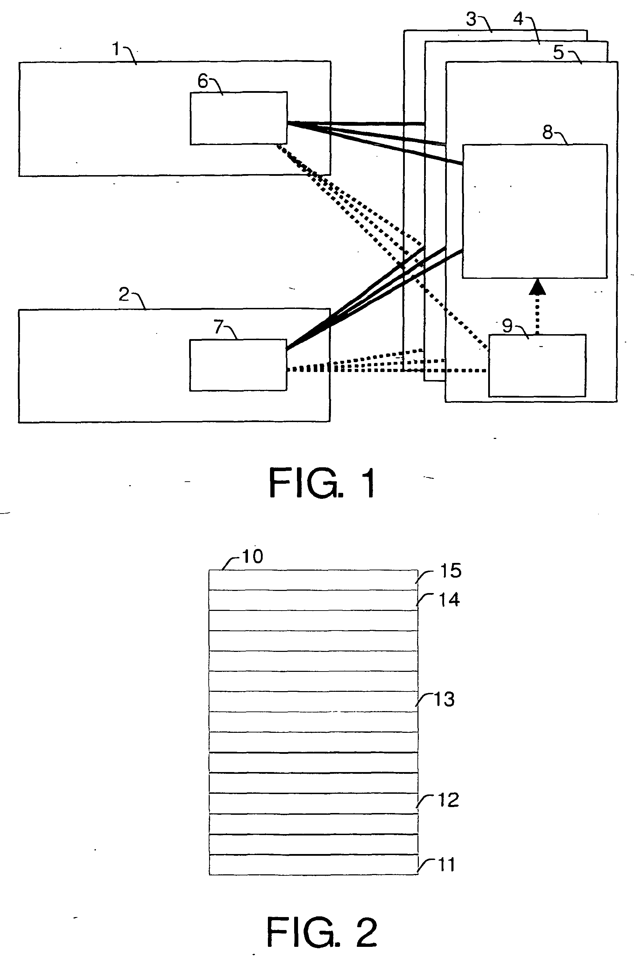

Eine in Fig. 1 dargestellte Paketvermitthmg5\Orrichtung besteht aus zwei Leitungs, einheiten 1 und 2 und mehreren Vermittlungseinheiten 3 bis 5. Die Anzahl der Leitungseinheiten 1 und 2 ist häufig viel Größer als zwei zB. 64, im Ausführungsbeispiel wurde sie aufgnmd einer überschtlichen Darstellung auf zwei beschränkt. Die Leitungseinheiten 1 und 2 bestehen jeweils aus unterschiedlichen für die Beschreibung des Ausführungsbeispiels nicht relevanten und deshalb nicht dargestellten Komponenten wie einer optische Ubertragungseinheit, Rähmmgmerator, Netzwerkprozessor etc., sowie einer für das Ausführungsbeispiel wesentlichen Portsteuerung 6 und 7. Jede Vermittlungseinheit 3 bis 5 besteht aus einer Koppelmatrix 8 und einer Zuteileinheit 9. Sowohl die Zuteleinheit 9 sowie die Koppelmatrix 8 jeder parallel arbeitenden Vermittlungseinheit 3 bis 5 sind jeweils mit der Portsteuerung 6 und 7 verbunden.

Datenpakete konstanter Lange werden als Zellen bezeichnet und werden bei der Vermittlung verendet. Da die Zellen konstanter Länge bei der Vermittlung leichter zu handhaben sind als Pakete wechselnder Größe, werden die ankommenden Pakete innerhalb der Leitungseinheiten 1 und 2 in Zellen konstanter Länge zerteilt und in Warteschlangen zwischengespeichert. Nach einer erfolgreichen Vermittlung, d.h. akzeptierte Zuordnung jeweils eines Eingangsports mit einem Ausgangsport, werden die Zellen aus der Warteschlange entfernt.

Anhand einer Gewichtung kann die Portsteuerung die Zuteileinheit informieren ob und wie dringend die sich im Eingangport befindenden Zelle vermittelt werden sollten. Eine Gewichtung kann Angaben über die Priorität und Klasse der Pakete bzw. die Wartzeit oder Größe einer Warteschlange im Eingangport beinhalten.

Die Portsteuerung 6 und 7 sendet die zur Bestimmung der Konfiguration der Koppelmatrix notwendigen Informationen, u.a. die Gewichtung an die Zuteileinheit 9. Die Informationen enthalten mehrere Informationseinheiten, welche die Zustände sowohl der Eingangsports als auch der Ausgangsports beschreiben. Falls in einem Ausgangsport der Paketvermitüungsvorrichtung keine Kapazität mehr für weitere Zellen besteht, wird dies in der Bestimmung der Konfiguration durch die Zuteileinheit berücksichtigt.

Nachdem die Zuteileinheit die Konfiguration der Koppelmatrix 8 ermittelt hat und die Konfiguration sowohl an die Portsteuerung als auch an die Koppelmatrix verschickt hat, wird die Koppelmatrix 8 jeder Verrrdttlungaeinheit entsprechend konfiguriert. Portsteuerung 6 und 7 versendet in regelmäßigen Zeitabständen den sog Zellperioden die Zellen zur Vermittlung an die Koppelmatrix 8.

In Fig. 2 werden die unterschiedlichen Zustände eines Speichers 10 der Ausgangsports dargestellt. Die Warteschlangen der Zellen im Ausgangsport werden durch einen Gemeinschaftsspeicher realisiert. Die Größe des aktuell zur Verfügung stehenden Speichers im Ausgangsport kann als Richtwert interpretiert werden, nach dem die Zelle mit entsprechender Priorität an den Ausgangsport vermittelt werden.

Die Zustände des Speichers werden in mehrere Stufen 11 bis 15 unterteilt. Der Speicher ist leer, wenn der Zustand des Speichers die Stufe 11 erreicht. Der Speicher ist beinah leer, wenn der Zustand des Speichers die Stufe 12 annimmt. Der Speicher ist halb voll, wenn der Zustand des Speichers die Stufe 13 erreicht und die Stufe 14 entspricht dem Zustand beinah voll. Bei der Stufe 15 ist der Speicher voll und kann keine Zelle mehr aufnehmen.

Bei dem vollen und fast vollen Zustand (Stufe 14 und 15) des Speichers vermittelt die Zuteileinheit 9 keine Zellen an diesen Ausgangsports. Falls der Speicher keine oder nur wenige Zellen beinhaltet, ist der Zustand (Stufe 12 und 13) des Speichers leer oder fast leer. Für diesen Fall kann die Zuteileinheit Zellen mit jeder Priorität an diesen Ausgangs port vermitteln. Bei dem halb vollen Zustand (Stufe 13) des Speichers vermittelt die Zuteileinheit 9 keine Zellen mit einer geringen Priorität an diesen Ausgangsport und hält damit den restlichen Teil des Speichers für Zellen mir hoher Priorität zur Vermittlung frei.

Eine Rückkopplungsinformationseinheiten beinhalten Informationen über den jeweiligen Zustand des Speichers eines Ausgangsports.

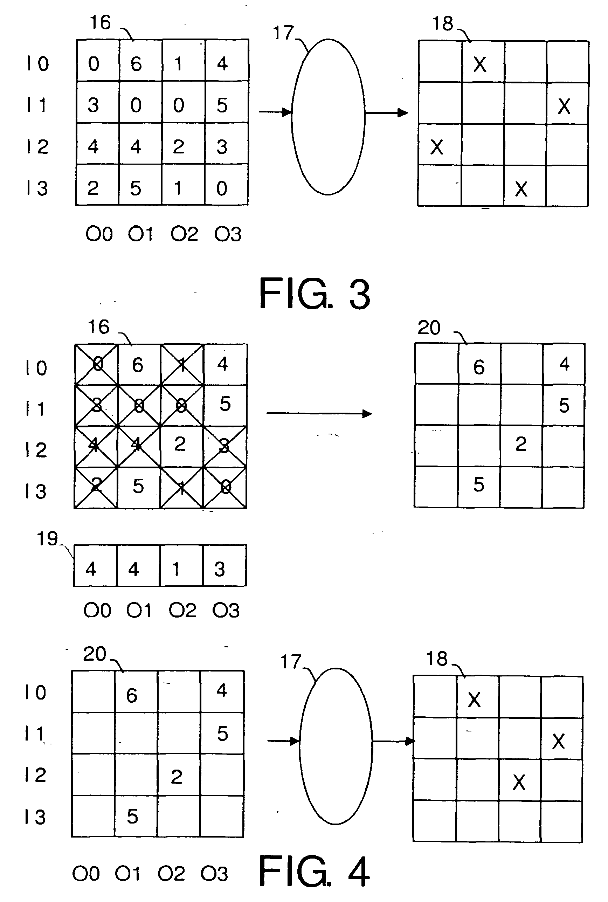

Fig 3 beschreibt die Vermittlung einer Paketvermittlungsvorrichtung mit vier Eingangsports (Input) I0 bis I3 und vier Ausgangsports (Output) O0 bis O3. Eine Zustandsmatrix 16 enthält sechzehn Elemente, welche die Cevächtung jeder Vercknüpfung eines Eingangsports I0 bis I3 mit einem Ausgangsport O0 bis O3 repräsentieren. Falls die Gewichtung der Zdlen auf ein minimale Bitzahl (einen Bit) reduziert wird, besteht die Zustandsmatrix 16 aus mehreren Einsen und Nullen, die als Binärzahlen jeweils nur eine Information enthalten, nämlich ob eine Zelle im entsprechend Eingangsport zur Vermittlung vorhanden ist oder nicht. Während der Vermittlung 17 berechnet die Zuteileinheit 9 die resultierenden Verknüpfungen. In einer Entscheidungsmatrix 18 sind die resultierenden Verknüpfungen gekennzeichnet.

Die Vermittlung von Zellen bedeute eine Verknüpfung der Eingangsports der Paketvermittlungsvorrichtung mit den Ausgangsports. Bei der Bestimmung der Verknüpfungen benutzt die Zuteileinheit 9 die Zustandsmatrix 16 und wählt anhand der Zustandsmatrix 16 die hoch gewichteten Verknüpfungen unter Verwendung eines entsprechenden Algorithmus aus Nachdem die Zuteileinheit für jeden Eingangsport bzw. Ausgangsport eine Verknüpfung bestimmt hat, werden diese Verknüpfungen in der Entscheidungsmatrix 18 markiert und die Koppelmatrix 8 entsprechend der Entscheidungsmatrix 18 konfiguriert.

Zur Erläuterung des erfindungsgemaßen Ausführungsbeispiels wird ein SIMP Algorithmus als Entscheidungsalgorithmus verwendet. Der nach Spalten der Zustandsmatrix arbeitenden Algorithmus wird in der Veröffentlichung"Weighted Arbitration Algorithms with Priorities for Input-Queued Switches with 100% Throughput" von R. Schoenen, G. Post, G. Sander, Broadband Switching Symposium '99, näher beschrieben. Andere Algorithmen wie z.B. ein zeilenweise arbeitender T-SIMP Algorithmus können für dieses Beispiel ebenfalls angewandt werden.

Da in der Spalte der Zustandsmatrix 16 des ersten Ausgangsport O0 das Element mit dem Wert vier größer ist als die anderen Elemente der ersten Spalte, wird diese Verknüpfung durch die Vermittlung 17 akzeptiert und in der Entscheidungsmatrix 18 gekennzeichnet. Am zweiten Ausgangsport O1 wird auf gleiche Art und Weise die nächste Verknüpfung akzeptiert, bis jeder Ausgangsport eine akzeptierte Verknüpfung aufweist. Dabei darf ein Ausgangsport nicht mit zwei-Eingangsports gleichzeitig verknüpft werden und ein Eingangsport darf nicht zwei Ausgangsport zugewiesen werden. Aus diesem Gnmd wird der erste Ausgangsport O0 mit dem dritten Eingangsport I2, der zweite Ausgangsport O1 mit dem ersten Eingangsport I0, der dritte Ausgangsport O2 mit dem vierten Eingangsport I3 und der vierte Ausgangsport O3 mit den zweiten Eingangsport I1 verbunden, da alle anderen Eingangsports nicht mehr in dieser Zellreriode zur Verfügung stehen.

Fig, 4 beschreibt die Vermittlung der Paketvermittlungsvorrichtung mit vier Eingangsports (Input) 10 bis 13 und vier Ausgangsports (Output) O0 bis O3 unter Verwendung eines Rückkopplungsverfahrens, das Mithilfe eines Rückkopplungsvektors 19 realisiert wird und die Zustände der Warteschlangen der Ausgangsports bei der Vermittlung der Zellen berücksichtigt. Die in Fig. 3 beschriebene Zustandsmatrix 16, Vermittlung 17 und Entscheidungsmatrix 18 werden durch eine zweite Zustandsmatrix 20 und den Rückkopplungsvektor 19 ergänzt. Der Rückkopplungsvektor 19 enthält vier Elemente, wobei jedes Element eine Rückkopplungsinformationseinheit repräsentiert, die den Zustand jeweils eines Ausgangsports wiedergibt. Die Zustandsmatrix 20 besteht aus Elementen der Zustandsmatrix 16, die anhand des Rückkopplungsvektors bei der Vermittlung 17 bestimmt werden.

Die Funktion der Vermittlung findet wie in Fig. 3 beschrieben statt. Sie unterscheidet sich in der Anwendung des Rückkopplungsvektors 19. Elemente der Zustandsmatrix 16, die kleiner als oder gleich wie das entsprechende Element des Ausgangsports sind, werden in der Vermittlung nicht berücksichtigt (in der Fig. 4 als gekreuzt gekennzeichnet). Die entsprechenden Eingangports I0 bis I3 können keine Zellen an die Ausgangsports O0 bis O3 verschicken. Elemente der Zustandsmatrix 16 die größer sind als das entsprechende Element in dem Rückkopplungsvektor 19 werden bei der Vermittlung berücksichtigt. Diese durch den Rückkopplungsvektor 19 bestimmten und gefilterten Elementen sind in der Zustandsmatrix 20 wieder zu finden.

Für den ersten Ausgangsport O0 kann kein Eingangsport vermittelt werden, da alle Elemente in der ersten Spalte kleiner, oder gleich dem entsprechende Element des Rückkopplungsvektors sind. Aus diesem Grund enthält Zustandsmatrix 20 kein Element in der ersten Spalte. Für den zweiten Ausgangsport O1 stehen zwei Elemente (sechs und fünf) der Zustandsmatrix 16 zur Verfügung, so dass diese zwei Elemente in der zweite Spalte der Zustandsmatrix 20 wieder zu finden sind Für den dritten Ausgangsport O2 steht nur ein Element der Zustandsmatrix 16 zur Verfügung, so dass nur der dritte Eingangsport bei der Vermittlung berücksichtigt wird und in der dritten Spalte der Zustandsmatrix 20 festgehalten wird. Für den vierten Ausgangsport O3 stehen zwei Elemente zur Verfügung entsprechend werden diese zwei Elemente in der vierten Spalte der Zustandsmatrix 20 notiert.

Während der Vermittlung 17 wird Ausgangsport O1 mit Eingangsport I0 unter Berücksichtigung der Elemente der Zustandsmatrix 20 verknüpft und entsprechend in der Entscheidungsmatrix 18 gekennzeichnet. Da Eingangsport I0 bereits mit dem zweiten Ausgangsport O2 als Verknüpfung akzeptiert wurde, kann der Ausgangsport O3 nur noch mit Eingangsport I1 verknüpft werden.

## Patentansprüche

1. Eine Paketvermittlungsvorrichtung mit
- wenigstens einer Leitungseinheit (1 und 2), die einem Ausgangsport mit einer Portsteuerung (6 und 7) zur Speicherung und zur Anordnung von Paketen in Warteschlangen sowie zur Generierung wenigstens einer Rückkopplungsinformationseinheit zur Information einer Zuteileinheit (9) über Zustände der Warteschlangen des Ausgangsports enthält,
- wenigstens einer Vermittlungseinheit (3 bis 5) mit einer Koppelmatrix und der Zuteileinheit (9) zur Steuerung der Koppelmatrix (8),
- einer Zustandsmatrix (16) zur Beschreibung der möglichen Verknüpfungen zwischen einem Eingangsport und einem Ausgangsport der Paketvermittlungsvorrichtung und
- einer Entscheidungsmatrix (18), in der nach einer Vermittlung (17) die akzeptierten Verknüpfungen markiert werden,
**dadurch gekennzeichnet,**
**dass** ein Rückkopplungsvektor (19) zur Reduzierung der möglichen Verknüpfung vorgesehen ist, der wenigstens ein Element enthält, welches die Zustande eines Speichers des Ausgangsports repräsentiert, wobei vorgesehen ist, Elemente einer Spalte (O0-O3) der Zustandsmatrix (16), die größer als das der Spalte entsprechende Element des Rückkopplungsvektors (19) sind, bei der Vermittlung zu berücksichtigen.

2. Paketvermittlungsvorrichtung nach Anspruch 1,
**dadurch gekennzeichnet,**
**dass** wenigstens eine Verbindung zwischen einem Ausgangsport und einer Zuteileinheit (9) der Paketvermittlungsvonir-hrung zur Information der Zuteileinheit (9) über Zustände der Warteschlangen an wenigstens einem Ausgangsport der Paketvermittlungsvorrichtung vorgesehen ist.

## Claims

1. A packet switching device comprising
- at least one line card (1 and 2) which contains an output port with a port control (6 and 7) for storage and arrangement of packets in queues and for generating at least one feedback information unit for information from an arbiter (9) about statuses of the output queues at the output port,
- at least one switch card (3 to 5) comprising a crosspoint matrix and the arbiter (9) to control the crosspoint matrix,
- a status matrix (16) to describe the possible combinations between an input port and an output port of the packet switching device,
- and a decision matrix (18) in which the accepted combinations are marked after switching (17),
**characterized in that** a feedback vector(19) consisting of at least one element which represents the statuses of a memory of the output port is provided to reduce the possible combining, wherein elements of a column (00-03) of the status matrix (16) which are greater than the element of the feedback vector (19) corresponding to the column are taken into account during switching.

2. A packet switching device as claimed in claim 1, **characterized in that** at least one link is provided between an output port and an arbiter (9) of the packet switching device to inform the arbiter (9) of statuses of the output queues of at least one output port of the packet switching device.

## Revendications

1. Dispositif de commutation de paquets avec
- au moins une unité de ligne (1 et 2) qui contient une porte de sortie avec une commande de porte (6 et 7) pour l'enregistrement et pour la disposition de paquets dans des files d'attente ainsi que pour la génération d'au moins une unité d'information de retour en vue de l'information d'une unité d'entrée (9) sur les états des files d'attente de la porte de sortie,
- au moins une unité de commutation (3 à 5) avec une matrice de jonction et l'unité d'entrée (9) pour la commande de la matrice de jonction (8);
- une matrice d'état (16) pour la description des liaisons possibles entre une porte d'entrée et une porte de sortie du dispositif de commutation de paquets et
- une matrice de décision (18) dans laquelle les liaisons acceptées sont marquées après une commutation (17),
**caractérisé en ce**
**qu'**un vecteur de retour (19) est prévu pour la réduction de la liaison possible qui contient au moins un élément qui représente les états d'une mémoire de la porte de sortie, auquel cas il est prévu de tenir compte lors de la commutation des éléments d'une colonne (00-03) de la matrice d'état (16) qui sont supérieurs à l'élément du vecteur de retour (19) correspondant à la colonne.

2. Dispositif de commutation de paquets selon la revendication 1,
**caractérisé en ce**
**qu'**au moins une liaison entre une porte de sortie et une unité d'entrée (9) du dispositif de commutation de paquets est prévue pour l'information de l'unité d'entrée (9) sur les états des files d'attente sur au moins une porte de sortie du dispositif de commutation de paquets.
